# EUROPEAN PATENT SPECIFICATION

(11) **EP 2 119 172 B1**
(45) Date of publication and mention of the grant of the patent: **30.10.2019**
(21) Application number: 08712284.2
(22) Date of filing: 01.02.2008
(51) Int. Cl.: H04L 29/02, H04L 29/06, H04L 12/66

(54) **METHOD AND SYSTEM FOR PROCESSING CALL CHANGE REQUEST IN AN INTERNET PROTOCOL MULTIMEDIA SUBSYSTEM**
VERFAHREN UND SYSTEM ZUR VERARBEITUNG VON RUFUMSCHALTUNGSANFRAGEN IN EINEM INTERNETPROTOKOLL-MULTIMEDIA-SUBSYSTEM
PROCÉDÉ ET SYSTÈME DE TRAITEMENT D'UNE DEMANDE DE CHANGEMENT D'APPEL DANS UN SOUS-SYSTÈME IP MULTIMÉDIA

(30) Priority: 05.02.2007 KR 20070011694
(43) Date of publication of application: 18.11.2009
(73) Proprietor: Samsung Electronics Co., Ltd., Suwon-si, Gyeonggi-do, 443-742 (KR)
(72) Inventor: YEOUM, Tae-Sun, Seoul 121-767 (KR); BAE, Eun-Hui, Seoul 151-832 (KR); CHOI, Sung-Ho, Suwon-si Gyeonggi-do 443-380 (KR); SONG, O-Sok, Suwon-si Gyeonggi-do 443-738 (KR); LIM, Han-Na, Siheung-si Gyeonggi-do 429-907 (KR)
(74) Representative: Nederlandsch Octrooibureau
(86) International application number: PCT/KR2008/000631
(87) International publication number: WO 2008/096986

(56) References cited:
- KR-A- 20000 061 400
- US-A1- 2006 256 748
- US-A1- 2006 256 779
- US-A1- 2007 213 078
- AT&T: "Tradeoffs between CSCF storage and SIP message size", 3GPP DRAFT; N1-001094 CSCF STORAGE VS SIP MESSAGE SIZE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CN WG1, no. Sophia; 20001020, 20 October 2000 (2000-10-20), XP050060981, [retrieved on 2000-10-20]
- AT&T: "Supplementary Services: Caller-ID", 3GPP DRAFT; S2-001875 001113 CALLER-ID, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Makuhari, Japan; 20001127, 27 November 2000 (2000-11-27), XP050233732, [retrieved on 2000-11-27]
- LUCENT TECHNOLOGIES: "Changes for Access Independence", 3GPP DRAFT; S2-022280 23228 CHANGES FOR ACCESS INDEPENDENCE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Toronto; 20020813, 13 August 2002 (2002-08-13), XP050240162, [retrieved on 2002-08-13]

## Description

### BACKGROUND OF THE INVENTION

### 1. Field of the Invention

The present invention relates generally to a mobile communication network, and in particular, to a method and apparatus for changing an old call to a new call in a User Equipment (UE) using Session Initiation Protocol (SIP).

### 2. Description of the Related Art

Voice service and real-time service are typical circuit-switched services. Circuit Switching (CS) is a scheme for establishing a circuit-switched fixed call route between users. In contrast, Internet Protocol Multimedia Subsystem (IMS) uses a packet-switched non-fixed call route based on Internet Protocol (IP). Due to the benefits of increased transmission efficiency and stability, the IMS is suitable for data service, messaging service, and file transfer service. The IMS can support multi-party calls as well as one-to-one calls.

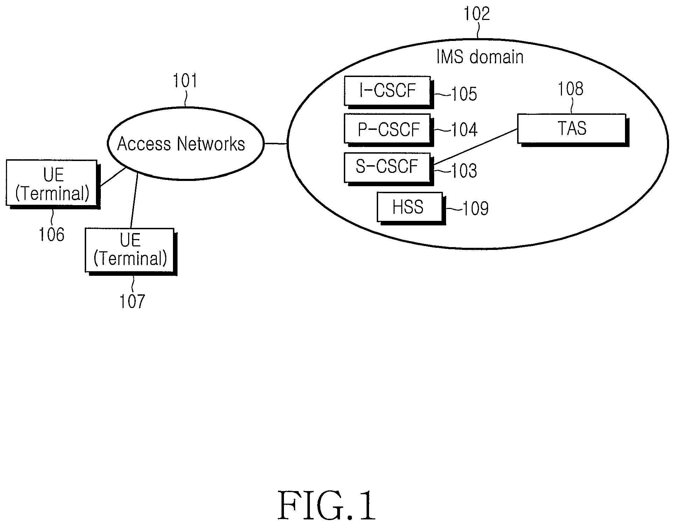

FIG. 1 illustrates an architecture for providing a telephony service over an IP network. Referring to FIG. 1, UEs 106 and 107 are mobile terminals subscribed to a telephony service over an IP network, and access an IMS domain 102 over the IP network via access networks 101. In the IMS domain 102, an Interrogate Call Session Control Function (I-CSCF) 105 provides routing information so that a call request message incoming to the IMS domain 102 can be transferred to an appropriate server.

A Proxy Call Session Control Function (P-CSCF) 104 is a network entity that acts as a contact point for the UEs 106 and 107 in the IMS domain 102. The P-CSCF 104 transmits messages received from the UEs 106 and 107 to an appropriate network in the IMS domain 102 or transmits messages received from a network entity in the IMS domain 102 to the UEs 106 and 107.

A Serving Call Session Control Function (S-CSCF) 103 establishes an IMS session and processes SIP messages received from the UEs 106 and 107. The S-CSCF 103 completes a session by transmitting SIP messages to entities of the IMS domain 102 to provide UE-requested services to the UEs 106 and 107. To provide a service to a subscriber, the S-CSCF 103 transmits an SIP message to an Application Server (AS) (not shown) that provides the service.

In the IMS domain 102, a Home Subscriber Server (HSS) 109 manages subscription information about subscribers and other information needed for providing services, and provides the information to network entities, upon request of the network entities.

A Telephony Application Server (TAS) 108 is an AS that provides an additional service similar to that provided in a legacy telephony network in the IMS domain 102. For example, a mobile communication network can provide an additional service for telephony, such as caller Identifier (ID) blocking. The TAS 108 is a network entity for providing existing telephony services including Originating Call Screening (OCS), call waiting, and caller ID service over an IMS network.

A call request message from an IMS user subscribed to an additional service is provided to the TAS 108 and the TAS 108 processes the call request message based on subscription information about the IMS user. For instance, upon receipt of a call request message from a user subscribing a caller ID blocking service, the TAS 108 transmits the call request message to a network after eliminating caller information from the call request message.

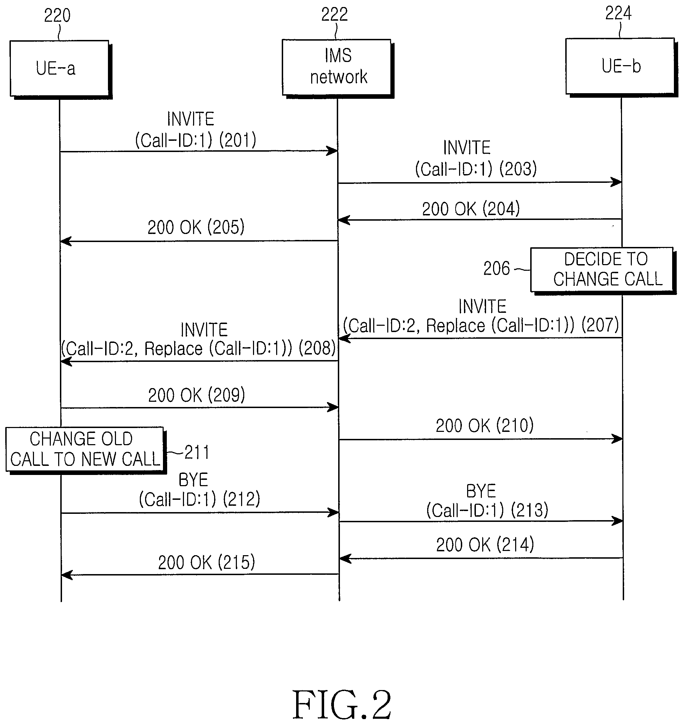

FIG. 2 is a diagram illustrating a signal flow of control messages when a called UE changes an old call to a new call in an IMS network in a conventional IMS-based mobile communication network. Referring to FIG. 2, a calling UE 220 (UE-a) transmits a call request message INVITE to a called UE 224 (UE-b) via an IMS network 222 in steps 201 and 203. In steps 204 and 205, UE-b transmits a response message, (200 OK) to UE-a via the IMS network. Thus, an IMS session is created between UE-a and UE-b and voice and data are exchanged between them during the IMS session. The call request message includes Call-ID 1.

UE-b determines that the IMS session, i.e. the old call needs to be changed to a new call in step 206 and transmits a call change request message, INVITE to UE-a via the IMS network in order to establish a new call in steps 207 and 208. The call change request message includes change information requesting that the old call with Call-ID 1 should be replaced with a new call with Call-ID 2 and also includes a phone number of UE-a as receiver information. In steps 209 and 210, UE-a transmits a response message (200 OK) for the INVITE message to UE-b via the IMS network. UE-a then changes the old call to the new call in step 211. UE-a transmits a release request message including Call ID-1, BYE to UE-b in order to release the old call in steps 212 and 213 and receives a response message (200 OK) for the BYE message from UE-b in steps 214 and 215. Then, the call change procedure ends.

The above procedure in the IMS network using the SIP requires that the called UE 224 should transmit a call change request message, INVITE including a "Replace" header with change information about the old call to be changed to the calling UE 220. Therefore, the called UE 224 needs identification information (hereinafter, caller information) about the calling UE 220 to request the call change.

However, if the calling subscriber is using the caller ID blocking service, the called UE 224 does not receive the caller information. As a result, the called UE 224 cannot generate the call change request. Moreover, if the phone number of the calling UE 220 is shared among a plurality of UEs, the call change request message may be transmitted to any other UE sharing the caller number, not to the calling UE 220. In this case, the called UE 224 fails in requesting the call change.

The TSG-SA WG2 document "Tradeoffs between CSCF storage and SIP message size", presented at the CN1 SIP Ad-Hoc Meeting, held 17-19 October 2000, discloses that in cases of originator requested calling-line-identification-blocking (CLIB), the information to be hidden from the user, e.g. caller identity, could be stored in the P-CSCF or S-CSCF. When needed for the subsequent call attempt, it can be inserted by the CSCF.

The TSG-SA WG2 document "Supplementary Services: Caller-ID", presented at SA2#15, held 13-17 November 2000, discloses information flows for the procedures for providing authenticated Caller-ID and Calling-Name information to the destination subscriber. It also describes the mechanisms for blocking the display of Caller-ID if requested by the originator.

### SUMMARY OF THE INVENTION

The invention is defined in independent method claims 1 and 4 and in corresponding independent device claims 6 and 10. An objective of the present invention is to solve at least the problems and/or disadvantages and to provide at least the advantages described below. Accordingly, an aspect of the present invention is to provide a method and apparatus for requesting a call change in a called UE irrespective of whether a calling UE uses caller ID blocking or a phone number of the calling UE is shared among a plurality of UEs in an IMS network that provides telephony service.

Another aspect of the present invention provides a method and apparatus for completing a call change request by identifying a calling UE in a network entity when a called UE requests a call change.

In accordance with an aspect of the present invention, there is provided a method for processing a call change request in a network entity in an IMS, in which a call request message requesting a first call is received from a calling UE, call information and caller information included in the call request message are stored and forwarded to a called UE, upon receipt of a call change request message requesting change of the first call to a second call from the called UE during the first call, the caller information of the calling UE is acquired using an old call information included in the call change request message and the stored call information, the caller information is inserted in receiver information of the call change request message, the call change request message with the caller information is delivered to the calling UE, and the second call is established between the calling UE and the called UE by replacing the first call with the second call according to the call change request message.

In accordance with another aspect of the present invention, there is provided a method for processing a call change request in a called UE in an IMS, in which a call request message is received from a calling UE, a first call is established between the calling UE and the called UE according to the call request message, a call change request message is generated by the called UE during the first call to change the first call to a second call, a known call change request number is inserted in receiver information of the call change request message, when the called UE does not know caller information of the calling UE, the call change request message with the call change request number is transmitted to a network, and the second call is established between the calling UE and the called UE by replacing the first call with the second call according to a response message received for the call change request message form the network.

In accordance with a further aspect of the present invention, there is provided a system based on an IMS, including a calling UE, a called UE, and a network entity. The network entity receives a call request message requesting a first call from the calling UE, stores call information and caller information included in the call request message, forwards the call request message to the called UE, acquires, upon receipt of a call change request message requesting change of the first call to a second call from the called UE during the first call, the caller information of the calling UE using an old call information included in the call change request message and the stored call information, inserts the caller information in receiver information of the call change request message, and delivers the call change request message with the caller information to the calling UE.

### BRIEF DESCRIPTION OF THE DRAWINGS

The above and other objects, features and advantages of the present invention will become more apparent from the following detailed description when taken in conjunction with the accompanying drawings, in which:
FIG. 1 illustrates a mobile communication network supporting IMS;
FIG. 2 is a diagram illustrating a signal flow of control messages when an old call is changed to a new call in an IMS network;
FIG. 3 is a diagram illustrating a signal flow of control messages in a called network, when a called UE changes an old call to a new call in a mobile communication network that provides a caller ID blocking service according to the present invention;
FIGs. 4A and 4B are diagrams illustrating a signal flow of control messages in the called network, when the called UE changes an old call to a new call in a network including a TAS that provides a caller ID blocking service according to the present invention;
FIG. 5 is a diagram illustrating a signal flow of control messages in a calling network having a calling UE sharing a phone number with another UE, when a called UE changes an old call to a new call in a mobile communication network according to the present invention;
FIG. 6 is a flowchart of an operation of an S-CSCF for providing a phone number of a calling UE in place of a called UE, when the called UE requests a call change according to the present invention;
FIG. 7 is a flowchart of an operation of an AS for providing a phone number of a calling UE in place of a called UE, when the called UE requests a call change according to the present invention; and
FIG. 8 is a flowchart of an operation of a called UE when it requests a call change according to the present invention.

### DETAILED DESCRIPTION OF THE EXEMPLARY EMBODIMENTS

The matters defined in the description such as a detailed construction and elements are provided to assist in a comprehensive understanding of the exemplary embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

While exemplary embodiments of the present invention will be described in the context of network entities that provide telephony service in an IMS network, a TAS and an S-CSCF, it is to be understood that procedures of the present invention can also be performed in other network entities.

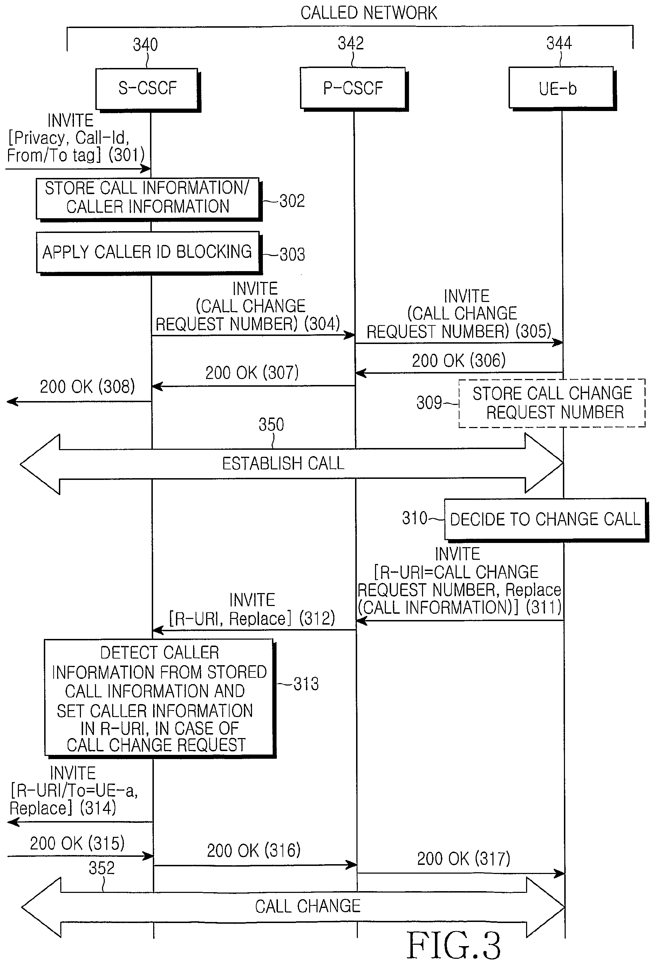

FIG. 3 is a diagram illustrating a signal flow of control messages in a called network, when a called UE changes an old call to a new call in a mobile communication network that provides a caller ID blocking service according to the present invention.

Referring to FIG. 3, in the called network, an S-CSCF 340 receives a call request message, INVITE from a calling UE (not shown) in step 301. The INVITE message includes call information and caller information. The call information has a 'Privacy' parameter indicating that the calling UE has subscribed to a caller ID blocking service, a call ID, a 'From' tag, and a 'To' tag. In step 302, the S-CSCF 340 stores the call information and the caller information. The caller information includes a phone number of the calling UE and identification information about the calling UE. If the calling UE has subscribed to the caller ID blocking service, the S-CSCF 340 eliminates the caller information identifying the calling UE from the call request message, INVITE, thus producing a modified call request message in step 303 and transmits the modified call request message to a called UE 344 (UE-b) via a P-CSCF 342 in steps 304 and 305.

When needed, the S-CSCF 340 may include a call change request number in the call request message, so that the UE-b 344 can use it when requesting a call change. For example, the S-CSCF 340 generates the call change request number arbitrarily. The UE-b 344 stores the call change request number for use in generating a call change request message in step 309.

In steps 306, 307 and 308, a response message (200 OK) in a general IMS call connection procedure, is transmitted to the calling UE via the P-CSCF 342 and the S-CSCF 340. Thus, a call is established between the calling UE and the UE-b 344 in step 350.

For some reason such as an IP address change resulting from changing the access network of UE-b, the UE-b 344 decides to request a call change in step 310. In steps 311 and 312, the UE-b 344 generates a call change request message, INVITE with information about the old call in a 'Replace' header and transmits the call change request message to the S-CSCF 340 via the P-CSCF 342. Since the UE-b 344 does not have caller information about the calling UE with which the old call has been established in steps 301 to 308, it does not have information about a receiver to receive the call change request message, to be set in a 'Request-URI (R-URI)' field. Therefore, the UE-b 344 writes the call change request number in 'Request-URI' of the call change request message, instead of the caller information.

The call change request number has been stored in the UE-b 344 or has been received from the network in steps 304 to 309. It can be further contemplated that 'Request-URI' can be set to an empty 'Request-URI' with no number. Upon receipt of the INVITE message including the call change request number that the network is aware of or including only information about the old call without the call change request number, the S-CSCF 340 appropriately processes the INVITE message, considering the INVITE message a call change request message.

A modified embodiment can be realized in which the call change request number is transmitted to the UE-b 344 by an e-mail or a Short Messaging Service (SMS) message. As stated before, the call change request number can be stored in advance in an internal memory of the UE-b 344.

In step 313, the S-CSCF 340 detects the caller information about the old call by comparing the information about the old call in the call change request message with the call information stored in step 302, and modifies the call change request message by eliminating the call change request number set in 'Request-URI' of the call change request message and writing the caller information instead. Then, the S-CSCF 340 transmits the modified call change request message to the calling UE over a calling network in step 314. The S-CSCF 340 may add or change other information about the receiver of the INVITE message, such as 'To header', in addition to 'Request-URI'.

In steps 315, 316 and 317, the calling UE transmits a response message, 200 OK, to the UE-b 344 via the networks. Thus, the old call is replaced with the new call between the calling UE and the UE-b 344 in step 352.

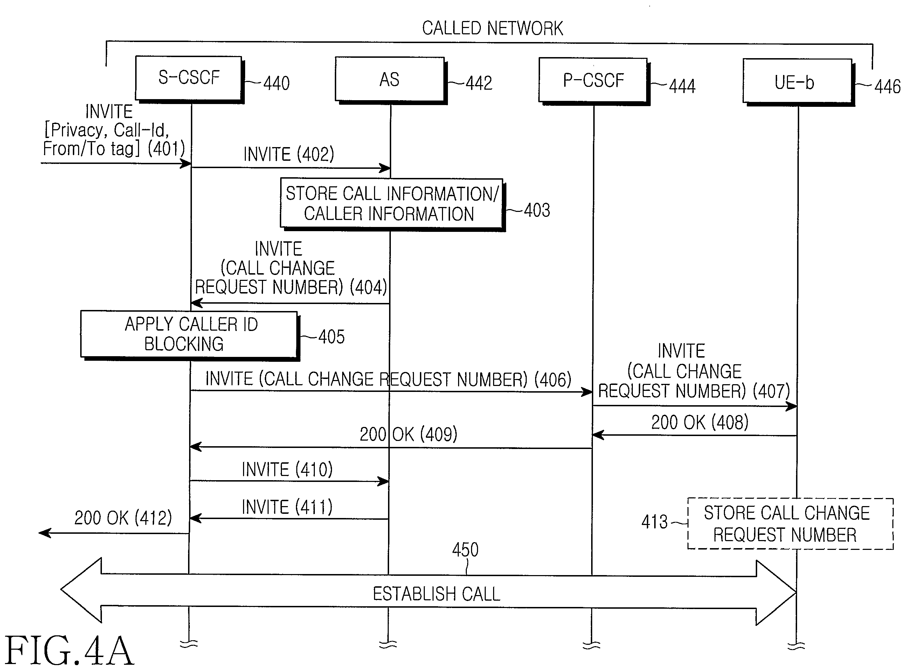

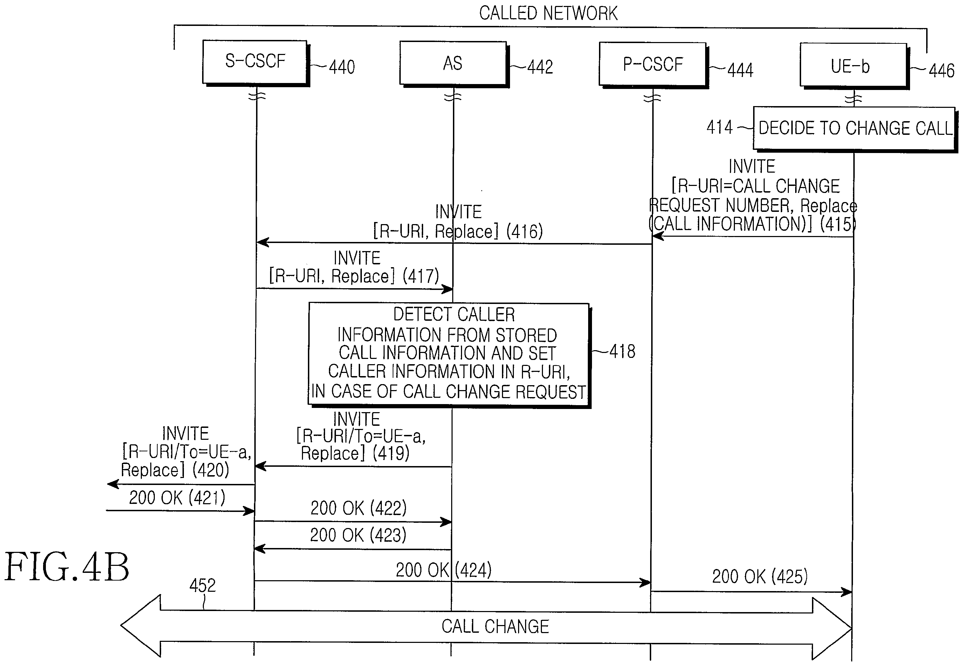

FIGs. 4A and 4B are diagrams illustrating a signal flow of control messages in a called network, when a called UE changes an old call to a new call in a network including a TAS that provides a caller ID blocking service according to the present invention. An AS 442 is not limited to a TAS and it can be any AS that operates according to a procedure of the present invention. The AS 442 operates in the same manner in both a calling network and a called network.

Referring to FIGs. 4A and 4B, in the called network, an S-CSCF 440 receives a call request message, INVITE from a calling UE (not shown) in step 401 and transmits the INVITE message to the AS 442 in step 402. The AS 442 stores call information and caller information included in the INVITE message in step 403 and returns the INVITE message to the S-CSCF 440 in step 404. Upon receipt of the INVITE message from the AS 442, the S-CSCF 440 eliminates the caller information identifying the calling UE from the INVITE message, thus producing a modified call request message in step 405 and transmits the modified INVITE message to a called UE 446 (UE-b) via a P-CSCF 444 in steps 406 and 407.

In the case where the AS 442 provides a telephony service like a TAS, the AS 442 can eliminate the caller information form the INVITE message, instead of the S-CCF 440. When needed, the AS 442 may include a call change request number in the INVITE message, so that the UE-b 446 can use it when requesting a call change. The UE-b 446 stores the call change request number for use in generating a call change request message in step 413.

In steps 408 to 412, the UE-b 446 transmits a response message (200 OK) used in the general IMS call connection procedure, to the calling UE via a network. Thus, a call is established between the calling UE and the UE-b 446 in step 450.

For some reason such as an IP address change resulting from changing the access network of UE-b, the UE-b 446 decides to request a call change in step 414. In steps 415, 416 and 417, the UE-b 446 generates a call change request message, INVITE with information about the old call in a 'Replace' header and transmits the INVITE message to the AS 442 via the network. Since the UE-b 446 does not have the caller information about the calling UE with which the old call has been established in steps 401 to 412, it does not have information about a receiver to receive the INVITE message, to be set in 'Request-URI'. Therefore, the UE-b 446 writes the call change request number in 'Request-URI' of the INVITE message, instead of the caller information.

The call change request number has been stored in UE-b or has been received from the network in steps 406 to 413. It can be further contemplated that the call change request number can be an empty one with no number information. Upon receipt of the INVITE message including the call change request number that the network is aware of or including only information about the old call without the call change request number, the AS 442 appropriately interprets the INVITE message, considering the INVITE message a call change request message.

A modified embodiment can be realized in which the call change request number is transmitted to the UE-b 446 by an e-mail or an SMS message. As stated before, the call change request number can be stored in advance in an internal memory of the UE-b 446.

In step 418, the AS 442 detects the caller information about the old call by comparing the information about the old call in the call change request message with the call information stored in step 403, and modifies the call change request message by eliminating the call change request number set in 'Request-URI' of the call change request message and writing the caller information instead. Then, the AS 442 transmits the modified call change request message to the calling UE via an S-CSCF 440 over a calling network in steps 419 and 420. The AS 442 may add or change other information about the receiver of the INVITE message, such as 'To header', in addition to 'Request-URI'.

In steps 421 to 425, the calling UE transmits a response message, 200 OK to the UE-b 446 via the networks. Thus, the old call is replaced with the new call between the calling UE and the UE-b 446 in step 452.

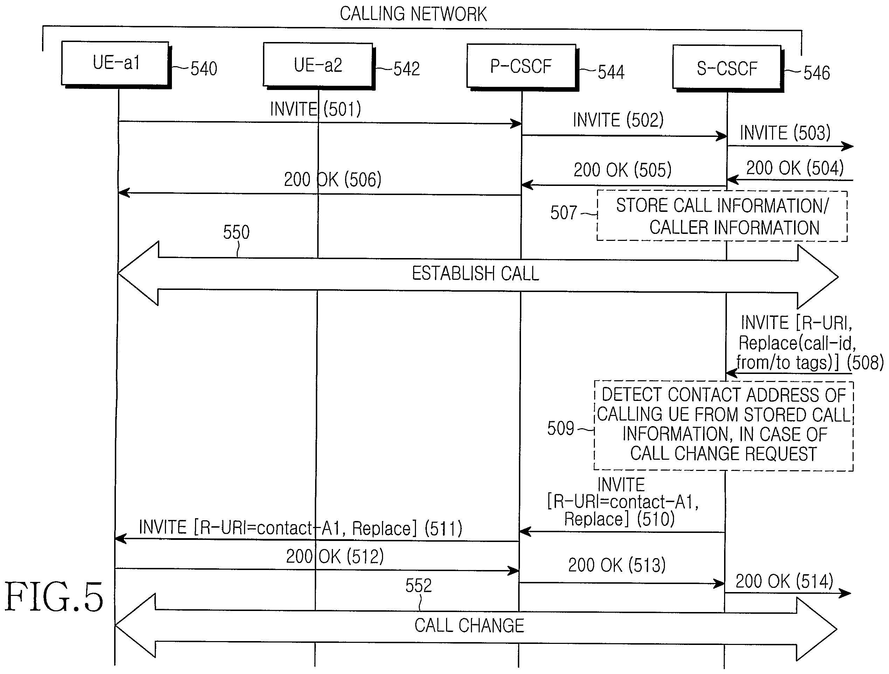

FIG. 5 is a diagram illustrating a signal flow of control messages in a calling network having a calling UE sharing a phone number with another UE, when a called UE changes an old call to a new call in a mobile communication network according to the present invention. A calling UE 540 (UE-a1) shares a phone number with another UE 542 (UE-a2).

Referring to FIG. 5, the UE-a1 540 exchanges messages INVITE and 200 OK with a called UE (not shown) via a P-CSCF 544 and an S-CSCF 546 in steps 501 to 506. Thus, a call is established between the UE-a1 540 and the called UE in step 550. The S-CSCF 546 stores call information about the established call in step 507.

Upon receipt of a call change request message, INVITE, from a called network having the called UE in step 508, the S-CSCF 546 detects a contact address 'contact-A1' such as an IP address to be used for routing the call change request message to a UE corresponding to a call indicated by a 'Replace' header in the call change request message, INVITE, by comparing call information set in the 'Replace' header with call information about the call going on through the S-CSCF 546 in step 509. If the S-CSCF 546 has found the contact address, it transmits the call change request message only to the UE-a1 540 having the contact address in steps 510 and 511, rather than it transmits the call change request message to all the UEs 540 and 542 sharing the phone number. That is, the S-CSCF 546 writes the contact address in 'Request-URI' in the call change request message and transmits the call change request message to UE-a1 via the P-CSCF 544. In steps 512, 513 and 514, the UE-a1 540 transmits a response message 200 OK for the call change request message to the called UE via the P-CSCF 544 and the S-CSCF 546. As a result, the old call is replaced with the new call in step 552.

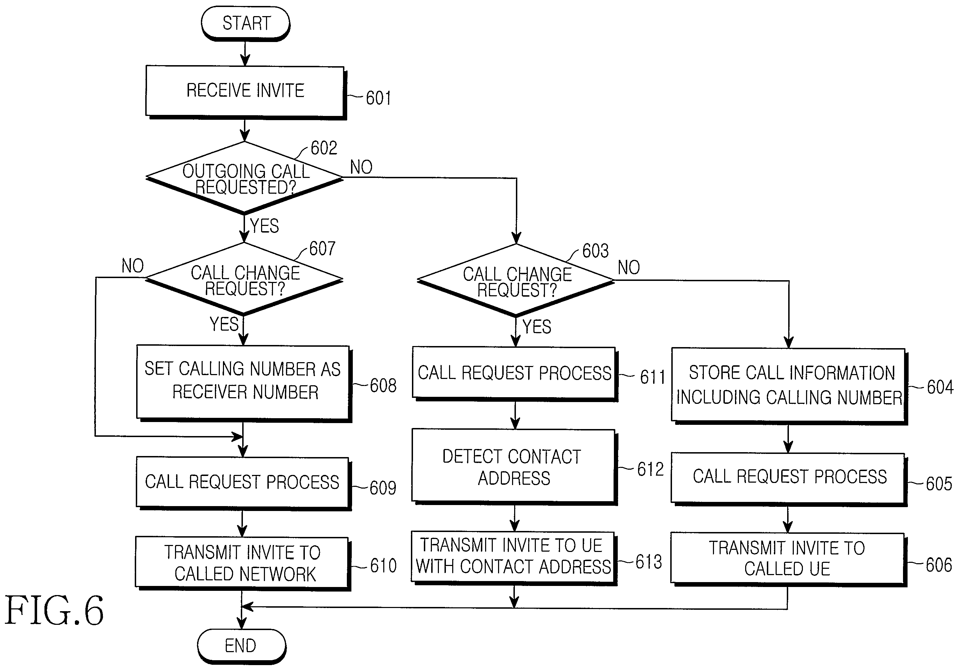

FIG. 6 is a flowchart of an operation of an S-CSCF for providing a phone number of a calling UE in place of a called UE in a called network, when the called UE requests a call change according to the present invention.

Referring to FG. 6, the S-CSCF receives an SIP-INVITE message in step 601 and determines if the INVITE message requests an outgoing call from a UE registered to the S-CSCF or the INVITE message is destined for the UE in step 602. In the latter case, the S-CSCF determines if the INVITE message is a call change request message by checking the presence or absence of a 'Replace' header in the INVITE message and the presence or absence of a call change request number in a 'Request-URI' field in step 603. For example, the call change request number takes the form of a Public Service Identity (PSI). Even in the absence of any number information in "Request-URI', the S-CSCF considers the INVITE message to be a call change request message.

If the INVITE message is not a call change request message, which implies that it is a conventional call request message, the S-CSCF stores call information included in the INVITE message in step 604 and performs a call process in step 605. After the call processing, the S-CSCF transmits the INVITE message to a called UE in step 606.

Meanwhile, if the INVITE message is a call change request message in step 603, the S-CSCF interprets the INVITE message in step 611 and detects the contact address of a UE to which a call is connected according to pre-stored call information in step 612. In step 613, even when a plurality of UEs share a phone number written in 'Request-URI' in the INVITE message, the S-CSCF writes the contact address in 'Request-URI' of the INVITE message so that the INVITE message can be transmitted only to the UE to which the call is connected, rather than transmitting the INVITE message to the plurality of UEs.

On the other hand, if the INVITE message has originated from the UE registered to the S-CSCF in step 602 and it is a call change request message in step 607, the S-CSCF detects a phone number of a UE to receive the INVITE message by comparing the pre-stored call information with information about an old call set in the 'Replace' header of the INVITE message and writes the phone number in 'Request-URI' in the INVITE message in step 608, performs a call request process in relation to the INVITE message in step 609, and transmits the modified INVITE message to a called network to which the called UE belongs in step 610. In contrast, if the INVITE message is not a call change request message in step 607, which implies that it is a new call request message, the S-CSCF jumps to step 609 to perform the call request process in relation to the INVITE message.

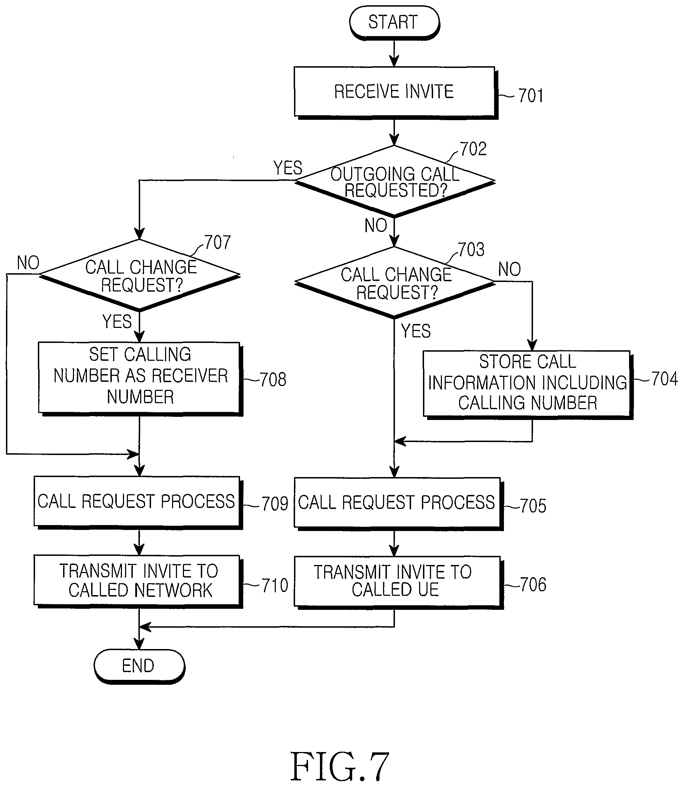

FIG. 7 is a flowchart of an operation of an AS for providing information about a calling UE in place of a called UE in a called network, when the called UE requests a call change according to the present invention.

Referring to FIG. 7, the AS receives an SIP-INVITE message in step 701 and determines if the INVITE message requests an outgoing call by a UE registered to the AS or the INVITE message is destined for the UE in step 702. In the latter case, the AS determines if the INVITE message is a call change request message by checking the presence or absence of a 'Replace' header and a 'Request-URI' field in the INVITE message in step 703. For example, a call change request number set in the 'Request-URI' takes the form of a PSI. In the absence of any number information in "Request-URI', the AS considers the INVITE message to be a call change request message.

If the INVITE message is not a call change request message, which implies that it is a conventional call request message, the AS stores call information included in the INVITE message in step 704 and performs a call process in step 705. After the call process, the AS transmits the INVITE message to a called UE via an IMS network in step 706.

Meanwhile, if the INVITE message is a call change request message in step 703, the AS jumps to step 705 to process the INVITE message.

On the other hand, if the INVITE message has originated from the UE registered to the AS in step 702 and it is a call change request message in step 707, the AS detects a phone number of a UE to receive the INVITE message by comparing pre-stored call information with information about an old call set in the 'Replace' header of the INVITE message and writes the phone number in 'Request-URI' in the INVITE message in step 708, performs a call request process in relation to the INVITE message in step 709, and transmits the modified INVITE message to a network to which the receiving UE belongs in step 110. In contrast, if the INVITE message is not a call change request message in step 707, which implies that it is a new call request message, the AS jumps to step 709 to perform the call request process in relation to the INVITE message.

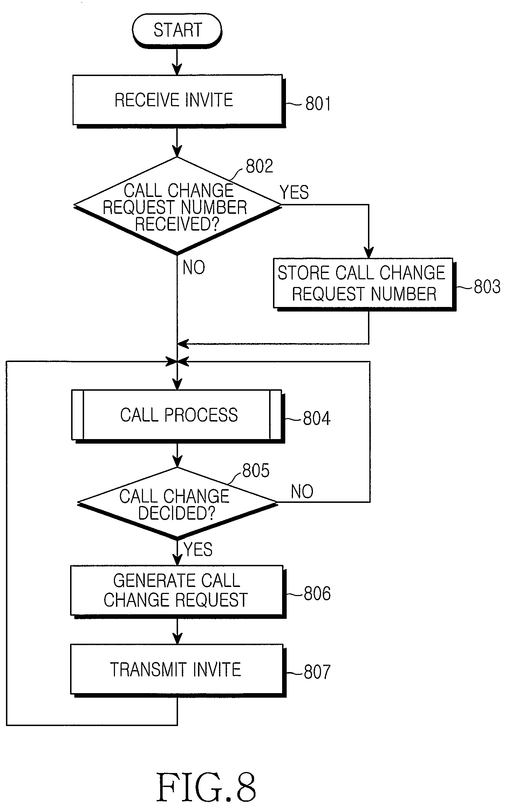

FIG. 8 is a flowchart of an operation of a called UE when it requests a call change according to the present invention. Referring to FIG. 8, upon receipt of an INVITE message from a network in step 801, a UE determines if the INVITE message includes a call change request number provided by a network in step 801. In the presence of a call change request number, the UE stores the call change request number in step 803 and processes the INVITE message by an IMS call process in step 804.

If determining to change a call for some reason in step 805, the UE generates a call change request message including call information about a new call to replace the old call in step 806. The call change request message is an INVITE message added with a 'Replace' header and a 'Request-URI' and the INVITE message includes a call change request number pre-stored in the UE or the call change request number received in step 803. Alternatively, the UE leaves the 'Request-URI' empty in the call change request message or uses a predetermined field such as a 'From' header of the received INVITE message as 'Request-URI' in the call change request message. The 'Replace' header includes information about the old call to be replaced with the new call, such as a call ID, a 'From' tag, and a 'To' tag. The call change request message is transmitted over the network in step 807. While not shown, the UE replaces the old call with the new call, upon receipt of a response message from a calling UE over the network.

As is apparent from the above description, the present invention advantageously facilitates reliable transmission of a call change request message to a UE to which an old call is connected by inserting accurate message transfer path information in the call change request message based on information about the old call pre-stored in an S-CSCF or an AS.

While the invention has been shown and described with reference to certain exemplary embodiments of the present invention thereof, it will be understood by those skilled in the art that various changes in form and details may be made therein without departing from the scope of the present invention as defined by the appended claims and their equivalents.

## Claims

1. A method for processing a call change request in a network entity in an internet protocol multimedia subsystem, IMS, comprising:
receiving (301) a call request message requesting a first call from a calling user equipment, UE, among a plurality of UEs sharing a phone number, storing (302) call information and caller information included in the call request message, and transmitting (304, 305) a modified call request message including a call change request number to a called UE, (344) wherein the caller information comprises the phone number and a contact address of the calling UE;
acquiring (313), upon receipt (312) of a call change request message requesting change of the first call to a second call from the called UE (344) during the first call, the caller information of the calling UE based on at least one of the call change request number and the stored call information;
inserting the caller information in receiver information of the call change request message and delivering (314) a modified call change request message with the caller information to the calling UE among the UEs sharing the phone number based on the contact address; and
establishing (352) the second call between the calling UE and the called UE (344) by replacing the first call with the second call according to the modified call change request message,
wherein the method further comprises eliminating the caller information from the call request message before the transmitting (304) of the modified call request message to the called UE (344), when the calling UE subscribes a caller identifier, ID, blocking service.

2. The method of claim 1, wherein the call change request number is written in the receiver information of the call change request message.

3. The method of claim 1, wherein at least one of a serving call session control function, S-CSCF, to which the called UE registers and an application server, AS, of an IMS network performs a call request message reception, a modified call request message transmission, a caller information detection, and a call change request message reception, a modified call change request message transmission, and a second call establishment.

4. A method for processing a call change request in a called user equipment, UE, (344) in an internet protocol multimedia subsystem, IMS, comprising:
establishing (350) a first call between a calling UE among a plurality of UEs sharing a phone number and the called UE (344) according to a call request message initiated by the calling UE, wherein the call request message includes call information and caller information, and the caller information comprises the phone number and a contact address of the calling UE;
generating, at the called UE (344), a call change request message during the first call to change the first call to a second call;
inserting a known call change request number in receiver information of the call change request message, when the called UE (344) does not know the caller information of the calling UE and transmitting (311, 312) the call change request message with the call change request number to a network; and
establishing (352) the second call between the calling UE and the called UE (344) by replacing the first call with the second call according to a response message received from the network in response to the transmitted call change request message.

5. The method of claim 4, wherein the call request message includes the call change request number for use in generating the call change request message.

6. A network entity (340) in an internet protocol multimedia subsystem, IMS, comprising:
at least one processor adapted to perform the method as defined in claim 1.

7. The network entity of claim 6, wherein the call change request number is written in the receiver information of the call change request message.

8. The network entity of claim 6, wherein the network entity includes at least one of a serving call session control function, S-CSCF, to which the called UE registers and an application server, AS, of an IMS network.

9. The network entity of claim 6 wherein the called UE inserts a known call change request number in receiver information of the call change request message and transmits the call change request message with the call change request number to the network entity, when the called UE does not have the caller information of the calling UE.

10. A called user equipment, UE (344), in an internet protocol multimedia subsystem, IMS, comprising:
at least one processor adapted to perform the method as defined in claim 4.

11. The called UE of claim 10, wherein the call request message includes the call change request number for use in generating the call change request message.

## Patentansprüche

1. Verfahren zur Verarbeitung einer Rufumschaltungsanfrage in einer Netzwerkeinheit in einem Internetprotokoll-Multimedia-Subsystem, IMS, umfassend:
Empfangen (301) einer Anrufanfragenachricht, die einen ersten Anruf von einem anrufenden Benutzergerät, UE, unter einer Vielzahl von UEs, die eine Telefonnummer teilen, anfragt, Speichern (302) von Anrufinformationen und Anruferinformationen, die in der Anrufanfragenachricht enthalten sind, und Übertragen (304, 305) einer modifizierten Anrufanfragenachricht, die eine Rufumschaltungsanfragenummer enthält, an ein angerufenes UE (344),
wobei die Anruferinformation die Telefonnummer und eine Kontaktadresse des anrufenden UE umfasst;
Erfassen (313) der Anruferinformationen des anrufenden UE nach Empfang (312) einer Rufumschaltungsanfragenachricht, die die Umschaltung des ersten Anrufs zu einem zweiten Anruf von dem angerufenen UE (344) während des ersten Anrufs anfragt, basierend auf mindestens einer von der Rufumschaltungsanfragenummer und/oder den gespeicherten Anrufinformationen;
Einfügen der Anruferinformationen in die Empfängerinformationen der Rufumschaltungsanfragenachricht und Übermitteln (314) einer modifizierten Rufumschaltungsanfragenachricht mit den Anruferinformationen an das anrufende UE unter den UEs, die die Telefonnummer basierend auf der Kontaktadresse teilen; und
Aufbau (352) des zweiten Anrufs zwischen dem anrufenden UE und dem angerufenen UE (344) durch Ersetzen des ersten Anrufs durch den zweiten Anruf gemäß der modifizierten Rufumschaltungsanfragenachricht,
wobei das Verfahren ferner das Eliminieren der Anruferinformationen aus der Anrufanfragenachricht vor der Übertragung (304) der modifizierten Anrufanfragenachricht an das angerufene UE (344) umfasst, wenn das anrufende UE einen Anruferidentifizierungs-ID-Blockierdienst abonniert.

2. Verfahren nach Anspruch 1, wobei die Rufumschaltungsanfragenummer in die Empfängerinformation der Rufumschaltungsanfragenachricht geschrieben wird.

3. Verfahren nach Anspruch 1, wobei mindestens eine von einer Dienstanrufsitzungssteuerfunktion, S-CSCF, an der sich das angerufene UE registriert und ein Anwendungsserver, AS eines IMS-Netzwerks einen Anrufanfragenachrichtenempfang, eine modifizierte Anrufanfragenachrichtenübertragung, eine Anruferinformationserfassung und einen Rufumschaltungsanfragenachrichtenempfang, eine modifizierte Rufumschaltungsanfragenachrichtenübertragung und einen zweiten Anrufaufbau durchführt.

4. Verfahren zur Verarbeitung einer Rufumschaltungsanfrage in einem angerufenen Benutzergerät, UE, (344) in einem Internetprotokoll-Multimedia-Subsystem, IMS, umfassend:
Aufbau (350) eines ersten Anrufs zwischen einem anrufenden UE unter einer Vielzahl von UEs, die eine Telefonnummer teilen und dem angerufenen UE (344) gemäß einer von dem anrufenden UE initiierten Anrufanfragenachricht, wobei die Anrufanfragenachricht Anrufinformationen und Anruferinformationen enthält und die Anruferinformationen die Telefonnummer und eine Kontaktadresse des anrufenden UE enthalten;
Erzeugen an dem angerufenen UE (344),
einer Rufumschaltungsanfragenachricht während des ersten Anrufs, um den ersten Anruf in einen zweiten Anruf zu ändern;
Einfügen einer bekannten Rufumschaltungsanfragenummer in die Empfängerinformation der Rufumschaltungsanfragenachricht, wenn das angerufene UE (344) die Anruferinformation des anrufenden UE nicht kennt, und Übertragen (311, 312) der Rufumschaltungsanfragenachricht mit der Rufumschaltungsanfragenummer an ein Netzwerk; und
Aufbau (352) des zweiten Anrufs zwischen dem anrufenden UE und dem angerufenen UE (344) durch Ersetzen des ersten Anrufs durch den zweiten Anruf gemäß einer Antwortnachricht, die von dem Netzwerk als Antwort auf die übertragene Rufumschaltungsanfragenachricht empfangen wurde.

5. Verfahren nach Anspruch 4, wobei die Anrufanfragenachricht die Rufumschaltungsanfragenummer zur Verwendung beim Erzeugen der Rufumschaltungsanfragenachricht enthält.

6. Netzwerkeinheit (340) in einem Internetprotokoll-Multimedia-Subsystem, IMS, umfassend:
mindestens einen Prozessor, der geeignet ist, um das in Anspruch 1 definierte Verfahren auszuführen.

7. Netzwerkeinheit nach Anspruch 6, wobei die Rufumschaltungsanfragenummer in die Empfängerinformation der Rufumschaltungsanfragenachricht geschrieben ist.

8. Netzwerkeinheit nach Anspruch 6, wobei die Netzwerkeinheit mindestens eine Dienstanrufsitzungssteuerfunktion, S-CSCF, enthält, bei der sich das angerufene UE registriert und einen Anwendungsserver, AS, eines IMS-Netzwerks umfasst.

9. Netzwerkeinheit nach Anspruch 6, wobei das angerufene UE eine bekannte Rufumschaltungsanfragenummer in Empfängerinformationen der Rufumschaltungsanfragenachricht einfügt und die Rufumschaltungsanfragenachricht mit der Rufumschaltungsanfragenummer an die Netzwerkeinheit überträgt, wenn das angerufene UE nicht über die Anruferinformationen des anrufenden UE verfügt.

10. Angerufenes Benutzergerät UE (344) in einem Internetprotokoll-Multimedia-Subsystem, IMS, umfassend:
mindestens einen Prozessor, der geeignet ist, um das in Anspruch 4 definierte Verfahren auszuführen.

11. Angerufenes UE nach Anspruch 10, wobei die Anrufanfragenachricht die Rufumschaltungsanfragenummer zur Verwendung beim Erzeugen der Rufumschaltungsanfragenachricht enthält.

## Revendications

1. Procédé de traitement d'une demande de changement d'appel dans une entité de réseau dans un sous-système multimédia de protocole internet, IMS, comprenant :
recevoir (301) un message de demande d'appel demandant un premier appel d'un équipement d'utilisateur, UE, d'appelant parmi une pluralité d'UE partageant un numéro de téléphone, stocker (302) des informations d'appels et des informations d'appelants incluses dans le message de demande d'appel, et transmettre (304, 305) un message de demande d'appel modifié incluant un numéro de demande de changement d'appel à un UE appelé (344)
où les informations d'appelant comprennent le numéro de téléphone et une adresse de contact de l'UE appelant ;
acquérir (313), lors de la réception (312) d'un message de demande de changement d'appel demandant le changement du premier appel en un deuxième appel de l'UE appelé (344) pendant le premier appel, les informations de l'appelant de l'UE appelant sur la base d'au moins un parmi un numéro de demande de changement d'appel et les informations d'appel stockées ;
insérer les informations d'appelant dans des informations de récepteur du message de demande de changement d'appel et délivrer (314) un message de demande de changement d'appel modifié avec les informations d'appelant à l'UE appelant parmi les UE partageant le numéro de téléphone sur la base de l'adresse de contact ; et
établir (352) le deuxième appel entre l'UE appelant et l'UE appelé (344) en remplaçant le premier appel par le deuxième appel conformément au message de demande de changement d'appel modifié,
où le procédé comprend en outre l'élimination des informations sur l'appelant du message de demande d'appel avant la transmission (304) du message de demande d'appel modifié à l'UE appelé (344), lorsque l'UE appelant s'est abonné à un service de blocage d'identifiant, ID, d'appelant.

2. Procédé selon la revendication 1, où le numéro de demande de changement d'appel est écrit dans les informations de récepteur du message de demande de changement d'appel.

3. Procédé selon la revendication 1, où au moins un parmi une fonction de commande de session d'appel de desserte, S-CSCF, à laquelle l'UE appelé s'est abonné et un serveur d'application, AS, d'un réseau IMS effectue une réception de message de demande d'appel, une transmission de message de demande d'appel modifié, une détection d'informations d'appelant, et une réception de message de demande de changement d'appel, une transmission de message de demande de changement d'appel modifié, et un deuxième établissement d'appel.

4. Procédé de traitement d'une demande de changement d'appel dans un équipement d'utilisateur, UE, appelé (344) dans un sous-système multimédia de protocole internet, IMS, comprenant :
établir (350) un premier appel entre un UE appelant parmi une pluralité d'UE partageant un numéro de téléphone et l'UE appelé (344) conformément à un message de demande d'appel initié par l'UE appelant, où le message de demande d'appel comprend des informations d'appel et des informations d'appelant, et les informations d'appelant comprennent le numéro de téléphone et une adresse de contact de l'UE appelant ;
générer, sur l'UE appelé (344), un message de demande de changement d'appel pendant le premier appel pour changer le premier appel en un deuxième appel ;
insérer un numéro de demande de changement d'appel connu dans des informations de récepteur du message de demande de changement d'appel, lorsque l'UE appelé (344) ne connaît pas les informations de l'appelant de l'UE appelant et transmettre (311, 312) le message de demande de changement d'appel avec le numéro de demande de changement d'appel à un réseau ; et
établir (352) le deuxième appel entre l'UE appelant et l'UE appelé (344) en remplaçant le premier appel par le deuxième appel conformément à un message de réponse reçu à partir du réseau en réponse au message de demande de changement d'appel transmis.

5. Procédé selon la revendication 4, où le message de demande d'appel comprend le numéro de demande de changement d'appel destiné à être utilisé pour générer le message de demande de changement d'appel.

6. Entité de réseau (340) dans un sous-système multimédia de protocole internet, IMS, comprenant :
au moins un processeur adapté pour mettre en œuvre le procédé tel que défini dans la revendication 1.

7. Entité de réseau selon la revendication 6, où le numéro de demande de changement d'appel est écrit dans des informations de récepteur du message de demande de changement d'appel.

8. Entité de réseau selon la revendication 6, où l'entité de réseau comprend au moins un parmi une fonction de commande de session d'appel de desserte, S-CSCF, à laquelle l'UE appelé s'est abonné et un serveur d'application, AS, d'un réseau IMS.

9. Entité de réseau selon la revendication 6 où l'UE appelé insère un numéro de demande de changement d'appel connu dans des informations de récepteur du message de demande de changement d'appel et transmet le message de demande de changement d'appel avec le numéro de demande de changement d'appel à l'entité de réseau, lorsque l'UE appelé n'a pas les informations d'appelant de l'UE appelant.

10. Équipement d'utilisateur, UE, appelé (344) dans un sous-système multimédia de protocole internet, IMS, comprenant :
au moins un processeur adapté pour mettre en œuvre le procédé tel que défini dans la revendication 4.

11. UE appelé selon la revendication 10, où le message de demande d'appel comprend le numéro de demande de changement d'appel destiné à être utilisé pour générer le message de demande de changement d'appel.
